(19) Europäisches Patentamt
European Patent Office
Office européen des brevets

(11) EP 4 741 876 A1

(12) EUROPEAN PATENT APPLICATION

(43) Date of publication:
13.05.2026 Bulletin 2026/20

(51) International Patent Classification (IPC):
G01S 13/60 (2006.01)  B60C 23/00 (2006.01)
B60T 8/00 (2006.01)

(21) Application number: 24211501.2

(22) Date of filing: 07.11.2024

(52) Cooperative Patent Classification (CPC):
B60C 23/0486; B60T 8/172; B60T 8/329;
G01S 13/605; B60T 2250/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Volvo Truck Corporation
405 08 Göteborg (SE)

(72) Inventors:
• JONASSON, Mats
  PARTILLE (SE)
• KUMRU, Murat
  GÖTEBORG (SE)
• MARZBANRAD, Alireza
  GÖTEBORG (SE)
• RYDSTRÖM, Mats
  BILLDAL (SE)

(74) Representative: Ström & Gulliksson AB
P.O. Box 4188
203 13 Malmö (SE)

(54) **RADAR-BASED WHEEL MOTION ESTIMATION**

(57) A system and method are disclosed for determining an absolute slip velocity between a wheel of a vehicle and a ground surface supporting the wheel. They system comprises: one or more wheel-mounted radar sensors configured to receive radio waves reflected from the ground surface; and processing circuitry configured to: determine a Doppler velocity corresponding to the ground surface based on properties of the received radio waves; and determine the absolute slip velocity between the wheel and the ground surface based on the determined Doppler velocity.

FIG. 3A

Description

TECHNICAL FIELD

The disclosure relates generally to vehicle control. In particular aspects, the disclosure relates to radar-based wheel motion estimation. The disclosure can be applied to heavy-duty vehicles, such as trucks, buses, and construction equipment, among other vehicle types. Although the disclosure may be described with respect to a particular vehicle, the disclosure is not restricted to any particular vehicle.

BACKGROUND

The dynamics of motion between the wheel of a vehicle and ground surface on which the vehicle is travelling are an important factor in the generation of tyre forces of a vehicle, which provide traction for the vehicle when it is in motion. For example, the relative velocity between the tyre and the ground surface at a contact patch between them has a large influence on traction. This relative velocity is known as the slip velocity or the sliding velocity, and can be used to determine the slip between the wheel and the ground surface, which is a measure of the relative motion between the wheel and the ground surface. The slip velocity and the associated wheel slip can be considered in a planar sense, which is to say in a longitudinal and/or lateral sense, at the contact patch.

Knowledge of the slip velocity (and the associated wheel slip) is important for vehicle motion management, in particular to control tyre forces and achieve various objectives relating to, for example, tyre wear, energy efficiency, traction, stability, and comfort. Accurate and reliable estimation of these parameters therefore enables reliable implementation of a large number of vehicle control functions.

However, estimating these parameters is challenging. Wheel slip, for example, is considered a so-called "hidden state", which can typically only be observed using high-fidelity simulation tools that provide a high level of detail. Current measurement solutions rely on entities far from the contact patch, while estimation solutions require an estimation of the longitudinal speed of the vehicle and its translation to the wheel hub, which is a significant challenge in itself. Moreover, computing these parameters is numerically sensitive to errors in sensor data and parameter estimations, which can reduce accuracy.

It is therefore desired to provide systems, methods and other approaches for vehicle motion estimation that attempt to resolve or at least mitigate one or more of these issues.

SUMMARY

This disclosure provides systems, methods and other approaches for determining an absolute slip velocity between a wheel of a vehicle and a ground surface on which the vehicle is travelling. The absolute slip velocity is the relative velocity between the tyre and the ground surface supporting the wheel at a contact patch between them. One or more wheel-mounted radar sensors is used to acquire a Doppler velocity corresponding to the ground surface. The Doppler velocity can then be used to determine the absolute slip velocity between the tyre and the ground surface. In some examples, this can be done directly based on the acquired Doppler velocity, while in other examples, motion parameters such as a rotation angle/angular rate of the wheel, a belt speed of the wheel, and a longitudinal velocity of the wheel can be used to determine the absolute slip velocity. The absolute slip velocity can then be used to determine a longitudinal wheel slip value for the wheel, which is a measure of the relative motion between the wheel and the ground surface that can be implemented in vehicle motion control.

According to a first aspect of the disclosure, there is provided a system for determining an absolute slip velocity, $\Delta v$, between a wheel of a vehicle and a ground surface supporting the wheel, the system comprising: one or more wheel-mounted radar sensors configured to receive radio waves reflected from the ground surface; and processing circuitry configured to: determine a Doppler velocity corresponding to the ground surface based on properties of the received radio waves; and determine the absolute slip velocity, $\Delta v$, between the wheel and the ground surface based on the determined Doppler velocity.

The first aspect of the disclosure may seek to provide a more accurate and reliable estimation of absolute slip velocity, and therefore longitudinal wheel slip, that can be implemented in vehicle motion control. Accurate determination of these parameters is important for vehicle motion management, in particular to control tyre forces and achieve various objectives. The estimation is provided using a system in the vicinity of the contact patch between the tyre and the ground surface, and can be achieved by determining an accurate estimation of the longitudinal speed of (the wheels of) the vehicle.

Optionally in some examples, including in at least one preferred example, the Doppler velocity is measured in a tangential dimension of the wheel. A technical benefit may include that a particular type of radar sensor can be used in the estimation of absolute slip velocity, which allows direct measurement of the absolute slip velocity in some examples.

Optionally in some examples, including in at least one preferred example, the tangential Doppler velocity $v_{doppler,tangential}$, corresponds to the ground surface and is measured parallel to the ground surface. A technical benefit may include that the absolute slip velocity can be measured directly, without the need for determination of any other motion parameters.

Optionally in some examples, including in at least one preferred example, the processing circuitry is further configured to: acquire one or more wheel parameters, wherein the wheel parameters include a rotation angle, $\theta$, of the wheel, a rotational speed $\omega$ of the wheel, a tyre radius $r_b$ of the wheel, a radial position of the one or more radar sensors, and a longitudinal velocity, $v_x$, of the hub of the wheel relative to the ground surface; acquire one or more tangential Doppler velocity measurements $v_{doppler,tangential}$, wherein the number of tangential Doppler velocity measurements $v_{doppler,tangential}$ corresponds to the number of unknown wheel parameters; determine one or more unknown wheel parameters based on the acquired wheel parameters and tangential Doppler velocity measurements, $v_{doppler,tangential}$; and determine the absolute slip velocity, $\Delta v$, based on the acquired and determined wheel parameters. A technical benefit may include that unknown motion parameters that affect the absolute slip velocity can be determined in a reliable manner, without the need for direct measurement, enabling simpler infrastructure and a more reliable estimation of the absolute slip velocity.

Optionally in some examples, including in at least one preferred example, the Doppler velocity is measured in a radial dimension of the wheel, and the processing circuitry is further configured to: acquire one or more wheel parameters, wherein the wheel parameters include a rotation angle, $\theta$, of the wheel, a rotational speed $\omega$ of the wheel, a tyre radius $r_b$ of the wheel, and a longitudinal velocity, $v_x$, of the hub of the wheel relative to the ground surface; acquire one or more radial Doppler velocity measurements $v_{doppler,radial}$, wherein the number of radial Doppler velocity measurements $v_{doppler,radial}$ corresponds to the number of unknown wheel parameters; determine one or more unknown wheel parameters based on the acquired wheel parameters and radial Doppler velocity measurements, $v_{doppler,radial}$; and determine the absolute slip velocity, $\Delta v$, based on the acquired and determined wheel parameters. A technical benefit may include that unknown motion parameters that affect the absolute slip velocity can be determined in a reliable manner, without the need for direct measurement, enabling simpler infrastructure and a more reliable estimation of the absolute slip velocity. Furthermore, a different type of radar sensor can be used in the estimation of absolute slip velocity.

Optionally in some examples, including in at least one preferred example, the Doppler velocity comprises a first Doppler velocity and a second Doppler velocity, and the processing circuitry is configured to: acquire a rotation angle, $\theta$, of the wheel; determine a longitudinal velocity, $v_x$, of the hub of the wheel relative to the ground surface using a state-space model based on the acquired first Doppler velocity, second Doppler velocity, and rotation angle, $\theta$; acquire a belt speed, $\omega * r$, of the wheel; and determine the absolute slip velocity, $\Delta v$, by subtracting the longitudinal velocity, $v_x$, from the belt speed, $\omega * r$. A technical benefit may include that the state space model can translate between states and measurements, meaning that hidden state variables can be determined.

Optionally in some examples, including in at least one preferred example, the processing circuitry is configured to determine a belt speed, $\omega * r$, of the wheel (110) using the state-space model. A technical benefit may include that further information can be determined about motion of the wheel without the need for increased infrastructure.

Optionally in some examples, including in at least one preferred example, the processing circuitry is further configured to: determine a longitudinal slip, $s_x$, acting on the wheel based on the determined absolute slip velocity, $\Delta v$, and the longitudinal velocity, $v_x$; and/or determine a longitudinal slip, $s_x$, acting on the wheel based on the determined absolute slip velocity, $\Delta v$, and the belt speed, $\omega * r$. A technical benefit may include that a more accurate and reliable estimation of longitudinal wheel slip can be provided that can be implemented in vehicle motion control.

Optionally in some examples, including in at least one preferred example, the processing circuitry is configured to determine the longitudinal slip, $s_x$, based on the largest of the longitudinal velocity, $v_x$, and the belt speed, $\omega * r$. A technical benefit may include that motion parameters of the wheel can be used in the determination of longitudinal wheel slip to avoid division by zero.

According to a second aspect of the disclosure, there is provided a vehicle comprising the system of the first aspect. The second aspect of the disclosure may seek to provide a vehicle capable of providing a more accurate and reliable estimation of absolute slip velocity, and therefore longitudinal wheel slip, that can be implemented in vehicle motion control.

Optionally in some examples, including in at least one preferred example, the system is mounted in one or more of a tyre or wheel hub of the vehicle. A technical benefit may include that the estimation of absolute slip velocity is provided using a system in the vicinity of the contact patch between the tyre and the ground surface.

Optionally in some examples, including in at least one preferred example, the system is configured to transmit one or more of a determined slip velocity and a longitudinal slip to a controller of the vehicle. A technical benefit may include that motion control of the vehicle is improved due to a more accurate and reliable estimation of absolute slip velocity, and therefore longitudinal wheel slip.

According to a third aspect of the disclosure, there is provided a method for determining an absolute slip velocity, $\Delta v$, between a wheel of a vehicle and a ground surface supporting the wheel, the method comprising: receiving, by one or more wheel-mounted radar sensors, radio waves reflected from the ground surface; determining, by processing circuitry of a computer system, a Doppler velocity corresponding to the ground surface based on properties of the received radio waves; and determining, by the processing circuitry, the absolute slip velocity, $\Delta v$, between the wheel and the ground surface based on the determined Doppler velocity.

The third aspect of the disclosure may seek to provide a more accurate and reliable estimation of absolute slip velocity, and therefore longitudinal wheel slip, that can be implemented in vehicle motion control. Accurate determination of these parameters is important for vehicle motion management, in particular to control tyre forces and achieve various objectives. The estimation is provided using a system in the vicinity of the contact patch between the tyre and the ground surface, and can be achieved by determining an accurate estimation of the longitudinal speed of (the wheels of) the vehicle.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to provide a more accurate and reliable estimation of absolute slip velocity, and therefore longitudinal wheel slip, that can be implemented in vehicle motion control.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to be controlled to provide a more accurate and reliable estimation of absolute slip velocity, and therefore longitudinal wheel slip, that can be implemented in vehicle motion control.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 schematically shows a side view of a vehicle according to an example of the disclosure.
FIGs. 2A to 2C illustrate kinematics of a wheel of a vehicle according to an example of the disclosure.
FIG. 3A to 3C schematically show a wheel comprising a system according to an example of the disclosure.
FIG. 4 is a flow chart of a computer-implemented method according to an example of the disclosure.
FIG. 5 is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

The dynamics of motion between the wheel of a vehicle and ground surface on which the vehicle is travelling are an important factor in the generation of tyre forces of a vehicle, which provide traction for the vehicle when it is in motion. For example, the relative velocity between the tyre and the ground surface at a contact patch between them has a large influence on traction. This relative velocity is known as the slip velocity or the sliding velocity, and can be used to determine the slip between the wheel and the ground surface, which is a measure of the relative motion between the wheel and the ground surface. Knowledge of these parameters is important for vehicle motion management, in particular to control tyre forces and achieve various objectives. However, estimating these parameters is challenging. Current measurement solutions rely on entities far from the contact patch between the tyre and the ground surface on which the vehicle is travelling, while estimation solutions require an estimation of the longitudinal speed of the vehicle and its translation to the wheel hub, which is a challenge in itself. Moreover, computing these parameters is numerically sensitive to errors in sensor data and parameter estimations, which can reduce accuracy.

To remedy this, systems, methods and other approaches are provided for determining an absolute slip velocity between a wheel of a vehicle and a ground surface on which the vehicle is travelling. One or more wheel-mounted radar sensors are used to acquire a Doppler velocity corresponding to the ground surface. The Doppler velocity can then be used to determine the absolute slip velocity between the tyre and the ground surface. In some examples, this can be done directly based on the acquired Doppler velocity, while in other examples, motion parameters such as a rotation angle/angular rate of the wheel, a belt speed of the wheel, and a longitudinal velocity of the wheel hub relative to the ground surface can be used to determine the absolute slip velocity. The absolute slip velocity can then be used to determine a longitudinal wheel slip value for the wheel, which can be implemented in vehicle motion control. In this way, a more accurate and reliable estimation of absolute slip velocity, and therefore longitudinal wheel slip, can be provided.

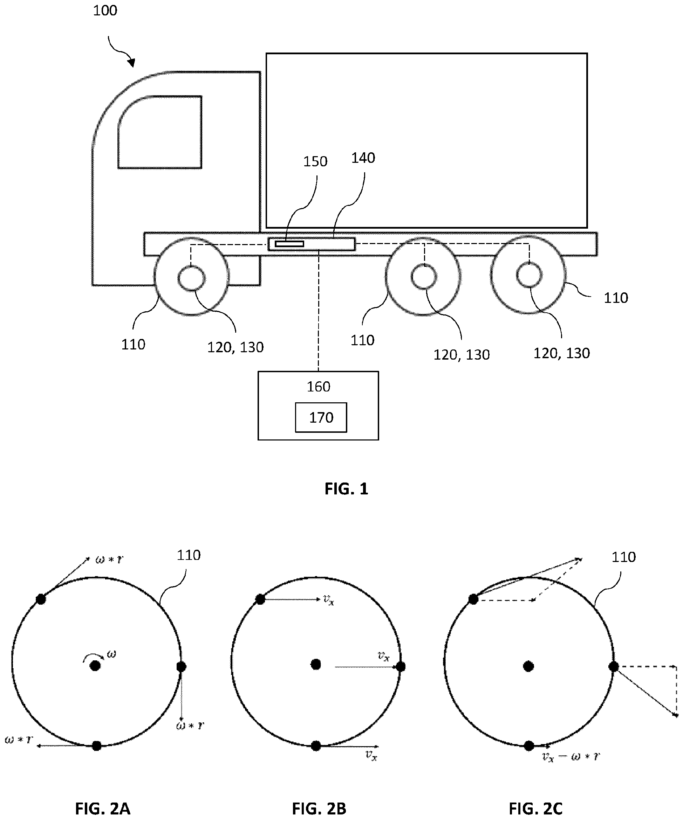

**FIG. 1** schematically shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. The vehicle **100** comprises a number of axles, each generally having two or more wheels **110**. Whilst three axles are shown, it will be appreciated that any suitable number of axles may be provided. It will also be appreciated that any number of the axles may be driven axles. The vehicle **100** normally comprises a steered axle, or more than one steered axle.

The vehicle **100** may comprise one or more sources of propulsion. For example, the vehicle **100** may comprise one or more electrical machines **120** such as electric motors and/or generators. The vehicle **100** may comprise one or more batteries (not shown) configured to provide power to the electrical machines **120**. In some examples, the vehicle **100** may also include another source of propulsion, for example an internal combustion engine (ICE). The vehicle **100** also comprises a drivetrain (not shown) to deliver mechanical power from the propulsion source (the electrical machines **120** or the ICE) to the wheels **110**. The vehicle **100** may be driven solely by ICE, solely by electric machines, or by a combination of electric and combustion engine based motors.

The electrical machines **120** are configured to drive, e.g. provide torque and/or steering to, one or more axles or individual wheels **110** of the vehicle **100**. The electrical machines **120** can supply either a positive (propulsion) or negative (braking) force. The use of electrical machines **120** to supply a negative force is known as regenerative braking, in which case the electrical machines **120** may be operated as generators, in order to recover energy during braking.

Furthermore, the vehicle **100** may comprise one or more sets of service brakes **130**. The service brakes **130** can supply a negative (braking) force. The service brakes **130** may be, for example, frictional brakes such as pneumatic brakes. Pneumatic brakes use a compressor to fill the brake with air, which may be powered by the batteries. In some examples, the brakes may be electro-mechanical brakes. The energy recovered from regenerative braking by the electrical machines **120** can be stored in the batteries, and so regenerative braking may generally be preferred over using service brakes. The electrical machines **120**, service brakes **130**, and ICE of a vehicle **100** may be referred to as motion support devices (MSDs) of the vehicle **100**.

In some examples, the vehicle **100** may be a vehicle combination comprising a number of units, including a tractor unit and at least one trailing unit. A tractor unit is generally the foremost unit in a vehicle combination, and may comprise the cabin for the driver, including steering controls, dashboard displays and the like. Generally, the tractor unit is used to provide propulsion power for the vehicle combination **100**. A trailing unit is generally used to store goods that are being transported by the vehicle combination **100**. A trailing unit may be a truck, trailer, dolly and the like. A trailing unit may also provide propulsion to the vehicle combination **100**. In such examples, each unit may comprise its own electrical machines **120**, batteries, service brakes **130**, and the like. In this way, all units may provide propulsion to the vehicle combination **100**.

When the vehicle **100** is in motion, the wheels (or indeed tyres) **110** of the vehicle **100** experience slip. The absolute slip velocity $\Delta v$ in such a situation (i.e. the relative velocity between the tyre and the ground surface supporting the wheel **110** may be given by:

$$\Delta v = \omega * r - v_x \qquad (1)$$

where $r$ is the tyre radius, $\omega$ is the wheel rotational speed (or angular velocity), and $v_x$ is the longitudinal velocity of the centre of the wheel hub relative to the ground surface supporting the wheel. The product $\omega * r$ of the wheel rotational speed $\omega$ and the tyre radius $r$ is referred to as the belt speed of the wheel **110**.

Slip can be expressed as the body slip of the vehicle **100** as a whole, as an axle slip, or the slip of a given wheel **110**, which can be divided into longitudinal and lateral slip. In some examples, the longitudinal slip $s_x$ on a wheel **110** may be given by:

$$s_x = \frac{\omega * r - v_x}{\max(\omega * r, v_x)} \qquad (2)$$

When the denominator of equation (2) is the belt speed $\omega * r$, the resulting longitudinal wheel slip $s_x$ is known as the theoretical longitudinal wheel slip. When the denominator of equation (2) is the longitudinal velocity $v_x$, the resulting longitudinal wheel slip $s_x$ is known as the practical longitudinal wheel slip. The maximum value of the belt speed $\omega * r$ and the

wheel hub longitudinal velocity $v_x$ may be used to avoid division by zero.

Returning to **FIG. 1,** the vehicle **100** includes a controller **140** comprising processing circuitry **150.** The controller **140** is configured to control components of the vehicle **100,** for example the electrical machines **120. FIG. 1** shows a common controller **140** for all electrical machines **120** of the vehicle **100,** however it will be appreciated that each electrical machine **120** may have its own respective controller **140.** In many cases, the controller **140** may be implemented in the structure of the electrical machine **120** itself. The controller **140** may be a microcontroller. In examples where the vehicle **100** is a vehicle combination, the vehicle **100** may include a global controller and a plurality of unit controllers, for example a controller for each unit. Vehicle motion management may therefore be available on a unit level to receive requests from a manual or virtual driver to coordinate the propulsion, braking and steering.

The controller **140** may receive control signals from a computer system **160** comprising processing circuitry **170.** The computer system **160** may be a vehicle control unit configured to perform various vehicle (unit) control functions, such as vehicle motion management. The computer system **160** may be local to the vehicle **100,** or may be a remote system, implemented at a distance from the vehicle **100.** The computer system **160** may be communicatively coupled to the controller **140** in any suitable way, for example via a circuit or any other wired, wireless, or network connection known in the art. Furthermore, the communicative coupling may be implemented as a direct connection between the controller **140** and the computer system **160,** or may be implemented as a connection via one or more intermediate entities.

One function of the controller **140** and the computer system **160** is to provide control inputs for the vehicle **100,** for example torque, force, or slip requests. To enable these control inputs to be accurate, reliable, and achieve certain objectives, an accurate estimation of longitudinal wheel slip is required. To enable this, an accurate estimation of an absolute slip velocity between the wheels **110** of the vehicle **100** and a ground surface on which the vehicle **100** is travelling should be acquired. In some examples, an estimation of lateral wheel slip may additionally or alternatively be determined.

**FIGs. 2A-C** illustrate the kinematics of a wheel **110** in three parts. For simplicity, it is assumed that the wheel **110** is circular with a tyre radius $r$. **FIG. 2A** illustrates a wheel exhibiting a rotational velocity $\omega$ around its centre axis, without any longitudinal (translational) velocity of the wheel hub. **FIG. 2B** illustrates a wheel **110** having a longitudinal velocity of the hub $v_x$ relative to the ground surface supporting the wheel, but no rotation. By using the principle of superposition, the rotational speed $\omega$ and longitudinal velocity $v_x$ can be added to describe the two degree-of-freedom wheel velocity vectors, as shown in **FIG. 2C.** It will be appreciated that the wheel **110** may also have a lateral velocity of the hub $v_y$ (not shown) relative to the ground surface.

Referring to **FIG. 2C,** the velocity vectors at three points around the circumference of the wheel **110** are shown. Of particular interest, it is noted that the point at the bottom of the wheel has a total speed of $v_x - \omega * r$ [m/s]. This is the relative velocity between the wheel **110** and the ground surface on which the wheel **110** is travelling (the ground surface supporting the wheel **110**). When given the opposite sign according to ISO standards, i.e. $\omega * r - v_x$, this is the absolute slip velocity $\Delta v$ of the wheel **110** as defined in equation (1). If $\Delta v > 0$ then there is a positive (propelling) force, and if $\Delta v < 0$ then there is a negative (braking) force.

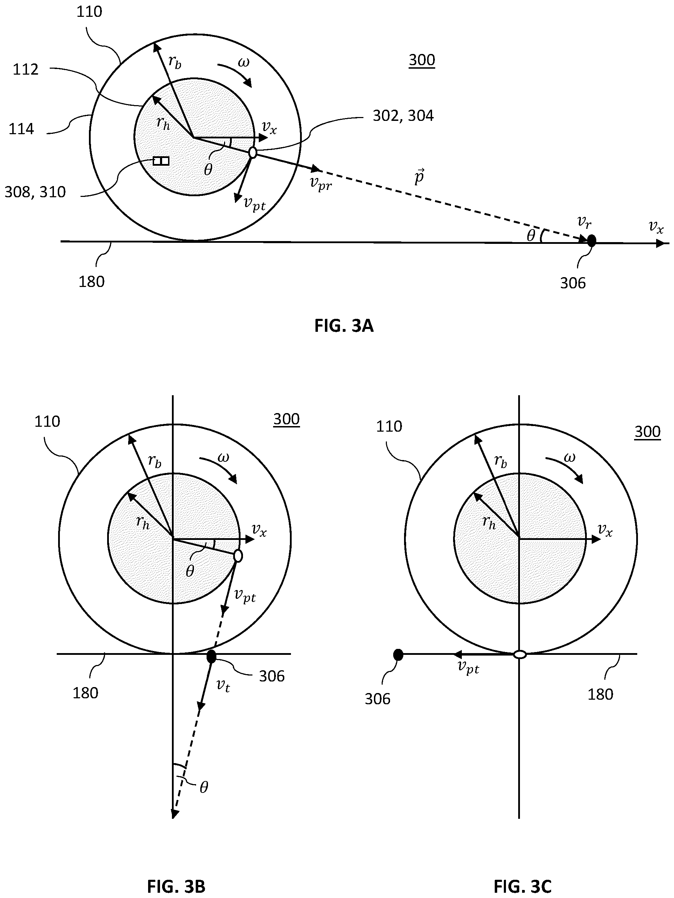

**FIG. 3A** schematically shows a wheel **110** and a system **300** for determining an absolute slip velocity between the wheel **110** and a ground surface **180** supporting the wheel **110.** The wheel **110** comprises a hub **112,** having a hub radius $r_h$, and a tyre **114,** having a tyre (or belt) radius $r_b$ (equivalent to the radius $r$ shown in **FIG. 2**). The system **300** comprises at least one wheel-mounted radar sensor **302** and processing circuitry **304.** In the example of **FIG. 3A,** the ground surface **180** is flat, although it will be appreciated that the following principles can be readily adapted to ground surfaces having an incline.

The wheel **110** has a longitudinal velocity (of the hub **112**) $v_x$ relative to the ground surface **180.** The wheel **110** has a rotational speed $\omega$ and a rotation angle $\theta$ (defined, for example, from an x-axis originating forward from the wheel centre). The rotational speed $\omega$ is the time derivative of the rotation angle $\theta$. The system **300** may also comprise a wheel angle sensor **308** configured to measure the rotation angle $\theta$ of the wheel **110.** This may be implemented by one or more rotational encoders, such as magnetic rotational encoders, located on a brake disc of the wheel **110.** The system **300** may also comprise a wheel angular speed sensor **310** configured to measure the rotational speed $\omega$ of the wheel **110.** Such sensors **308, 310** are known in the art and not discussed in further detail here

At a given moment, the radar sensor **302** is at a rotational position corresponding to the rotation angle $\theta$ of the wheel **110.** As shown in **FIG. 3A,** the radar sensor **302** has a tangential velocity vector $v_{pt}$ and a radial velocity vector $v_{pr}$ in the reference frame of the wheel **110.** These can be expressed as follows:

$$v_{pr} = v_x * cos\ \theta \qquad\qquad (3)$$

$$v_{pt} = r_h * \omega \qquad\qquad (4)$$

In the example of **FIG. 3A,** the radar sensor **302** and processing circuitry **304** are mounted in the tyre **114,** in particular at the edge or rim of the hub **112.** It may be envisaged that the radar sensor **302** and processing circuitry **304** may be mounted elsewhere in the hub **112,** for example in a hub cap or other part of the hub **112,** or in the tyre **112.** It will be noted that, if the radar sensor **302** is mounted at another radial position on the wheel **110,** that this radial position is used in equation (4) instead of the hub radius $r_h$.

The radar sensor **302** comprises a radar antenna and/or transceiver configured to receive and/or transmit radio waves, in particular to receive radar backscatter from the environment outside of the wheel **110** in the vicinity of the radar sensor **302.** The radar sensor **302** emits a radar beam towards the ground surface **180,** in particular to a radar target **306** where the radar beam intersects ground surface **180.** The direction of the radar beam from the radar sensor **302** is denoted $\vec{p}$. The magnitude of $\vec{p}$ corresponds to the Doppler speed reaching the radar sensor **302.** By analysing the shift in the frequency of the returned signal relative to the transmitted signal (the so-called Doppler shift), the relative velocity (Doppler velocity) of the target along a boresight direction of the radar sensor **302** can be determined, as known in the art. This can be performed by processing circuitry **304** communicatively coupled to the radar sensor **302.**

In the example of **FIG. 3A,** the radar beam is in a radial direction (i.e. the boresight direction of the radar sensor **302** is radial) relative to the wheel **110.** The velocity of the radar beam in the radial direction is denoted $v_r$. A distance $R_1$ (not shown) is defined along the boresight direction between the radar sensor **302** and the target **306,** and may be expressed as follows:

$$R_1 = \frac{r_b}{sin(\theta)} - r_h \qquad (5)$$

The rate of change $\dot{R}_1$ of this distance may be expressed as follows:

$$\dot{R}_1 = \frac{d}{dt}\left(\frac{r_b}{sin(\theta)} - r_h\right) * \frac{d\theta}{dt} \qquad (6)$$

It is noted that a radar sensor **302** generally illuminates an area and not a localized small point, since the radar beam is normally not a true laser-like or pencil-shaped beam. Thus, even single-beam radar sensors simultaneously collect radar backscatter from different observation directions due to the spread of the main radar transmission lobe, i.e., due to the shape of the main lobe of the radar sensor antenna including effects of, e.g., the radar front end on the overall transmission pattern of the radar sensor. The radar sensor **302** will therefore see a spectrum of different Doppler velocities corresponding to different viewing angles. The extent of the spread depends mainly on the antenna characteristics of the radar sensor **302,** but also the reflection properties of the environment and the vehicle components in the near-field of the radar sensor **302.** The radar beam may also penetrate slightly below the immediate surface of the ground.

The velocity of the radar beam in the radial direction $v_r$ can be expressed as follows:

$$v_r = \dot{R}_1 + v_x * \cos(\theta) \qquad (7)$$

$$v_r = \frac{d}{dt}\left(\frac{r_b}{sin(\theta)} - r_h\right) * \frac{d\theta}{dt} + v_x * \cos(\theta) \qquad (8)$$

$$v_r = -r_b \frac{\cos(\theta)}{\sin(\theta)^2} * \omega + v_x * \cos(\theta) \qquad (9)$$

The Doppler velocity $v_{doppler,radial}$ from a radially directed measurement is the negative of the velocity of the radar beam in the radial direction $v_r$, and can therefore be expressed as follows:

$$v_{doppler,radial} = r_b \frac{\cos(\theta)}{\sin(\theta)^2} * \omega - v_x * \cos(\theta) \qquad (10)$$

The radial Doppler velocity $v_{doppler,radial}$ is therefore related to the tyre (or belt) radius $r_b$, the rotation angle $\theta$ of the wheel **110,** the rotational speed $\omega$ of the wheel **110,** and the longitudinal velocity $v_x$ (of the hub **112)** of the wheel **110.** It will be appreciated that values of the rotation angle $\theta$ that result in division by zero may be avoided by setting appropriate thresholds for the rotation angle $\theta$ when radial radar measurements can be used.

**FIG. 3B** schematically shows an example where the boresight direction of the radar sensor **302** is tangential relative to the wheel **110**. The velocity of the radar beam in the tangential direction is denoted $v_t$. A distance $R_2$ (not shown) is defined along the boresight direction between the radar sensor **302** and the target **306,** and may be expressed as follows:

$$R_2 = \frac{r_b - r_h \sin(\theta)}{\cos(\theta)} \tag{11}$$

The rate of change $\dot{R}_2$ of this distance may be expressed as follows:

$$\dot{R}_2 = \frac{r_b * \sin(\theta) - r_h}{\cos^2 \theta} * \frac{d\theta}{dt} \tag{12}$$

The velocity of the radar beam in the tangential direction $v_t$ can be expressed as follows:

$$v_t = \dot{R}_2 + r_h * \omega - v_x \sin(\theta) \tag{13}$$

$$v_t = \frac{r_b * \sin(\theta) - r_h}{\cos^2 \theta} * \frac{d\theta}{dt} + r_h * \omega - v_x \sin(\theta) \tag{14}$$

$$v_t = \frac{r_b * \sin(\theta) - r_h}{\cos^2 \theta} * \omega + r_h * \omega - v_x \sin(\theta) \tag{15}$$

The Doppler velocity $v_{doppler,tangential}$ from a tangentially directed measurement is the negative of the velocity of the radar beam in the tangential direction $v_t$, and can therefore be expressed as follows:

$$v_{doppler,tangential} = -\frac{r_b * \sin(\theta) - r_h}{\cos^2 \theta} * \omega - r_h * \omega + v_x \sin(\theta) \tag{16}$$

The tangential Doppler velocity $v_{doppler,tangential}$ is therefore related to the tyre (or belt) radius $r_b$, the rotation angle $\theta$ of the wheel **110**, the hub radius $r_h$ (or radial position of the radar sensor **302),** the rotational speed $\omega$ of the wheel **110,** and the longitudinal velocity $v_x$ (of the hub **112)** of the wheel **110**. It will be appreciated that values of the rotation angle $\theta$ that result in division by zero may be avoided by setting appropriate thresholds for the rotation angle $\theta$ when tangential radar measurements can be used.

Based on these principles, a model can be formulated that enables the absolute slip velocity $\Delta v$ between the wheel **110** and the ground surface **180** to be determined based on the measurements from the radar sensor **302**, as will be discussed below.

In some examples, the system **300** may comprise a first radar sensor **302** configured to direct a beam in a radial direction and a second radar sensor **302** configured to direct a beam in a tangential direction. In some examples, the system **300** may comprise a radar sensor **302** configured to direct beams in both radial and tangential directions, for example a radar sensor **302** comprising an antenna array. In some examples, a radar sensor **302** may be configured to direct a beam in a transverse direction, which can be used to determine lateral motion of the wheel **110**.

In some examples, the radar sensor **302** and processing circuitry **304** may be provided in a single, integrated unit. In these examples, the radar sensor **302** may be communicatively coupled to the processing circuitry **304** via any suitable circuit or wired network connection known in the art. In some examples, the radar sensor **302** and processing circuitry **304** may be provided in separate wheel-mounted units. In these examples, the radar sensor **302** may be communicatively coupled to the processing circuitry **304** via any suitable wireless or network connection known in the art. In some examples, the processing circuitry **304** may be implemented by the processing circuitry **150** of the controller **140,** or the processing circuitry **170** of the computer system **160** described in relation to **FIG. 1**. The radar sensor **302** may be communicatively coupled to the controller **140,** or the computer system **160** in any suitable way, for example via a circuit or any other wired, wireless, or network connection known in the art. All communicative couplings may be implemented as a direct connection or via one or more intermediate entities.

Whilst a single radar sensor **302** is shown in **FIG. 3A,** multiple wheel-mounted radar sensors **302** may be present in the system **300.** In this case, each radar sensor **302** may comprise a radar antenna communicatively coupled to common processing circuitry **304.** In another example, each radar sensor **302** may have its own dedicated processing circuitry **304.** In some examples, a combination of common and dedicated processing circuitry **304** may be provided. This disclosure is not limited to any particular radar sensor architecture, nor any particular processing circuitry architecture.

For the radar sensor **302** to receive radar signal backscatter from the environment outside of the wheel **110,** the tyre **114** must be at least partly radio-permeable (i.e. such that radio waves from outside of the wheel **110** can be received from a radar sensor **302** mounted in the wheel **110).** For example, the tyre **114** may comprise materials such as rubber, glass fibre, carbon fibre, puncture repair gel, road noise absorbing foam, and the like that do not block radio waves from passing through the tyre **114.**

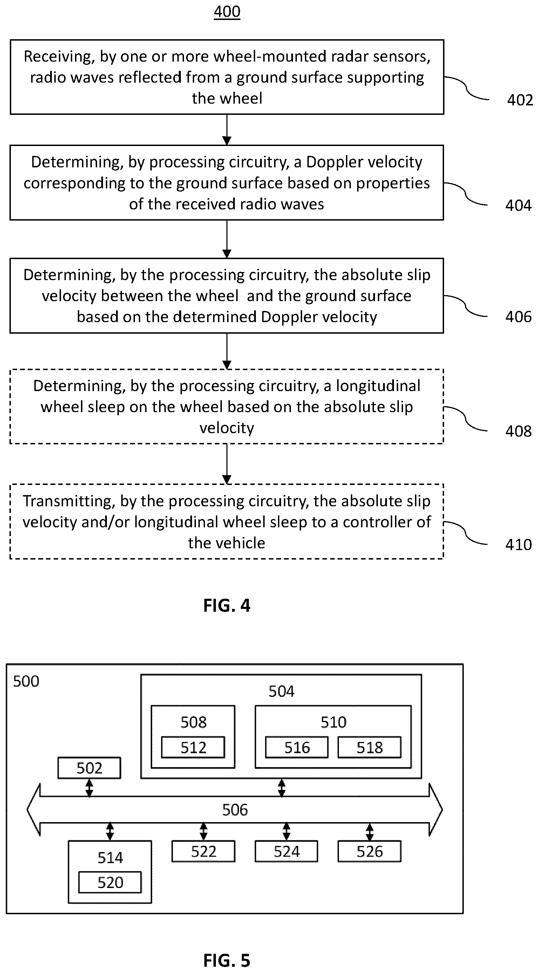

**FIG. 4** is a flow chart of a method **400** according to an example. The method **400** is for determining an absolute slip velocity $\Delta v$ between a wheel **110** of a vehicle **100** and a ground surface **180** supporting the wheel **110.** The method **400** enables more accurate and reliable estimation of absolute slip velocity, and therefore longitudinal wheel slip, to be provided. The method may be performed by the system **300** discussed in relation to **FIGs. 3A** to **3C.** The absolute slip velocity $\Delta v$ may be determined for one or more (including all) wheels **110** of a vehicle **100.**

At **402,** radio waves reflected from the ground surface **180** supporting the wheel **110** are received by one or more wheel-mounted radar sensors **302.** The radio waves may result from a radar beam directed in a radial direction relative to the wheel **110** and/or in a tangential direction relative to the wheel **110,** as discussed above. In some examples, radio waves may also be received reflected from another entity in the vicinity of the radar sensor **302,** such as a housing partially surrounding the wheel **110.**

At **404,** a Doppler velocity corresponding to the ground surface **180** supporting the wheel **110** determined based on properties of the received radio waves. As discussed above, by analysing the shift in the frequency of the returned signal relative to the transmitted signal (the so-called Doppler shift), the Doppler velocity of the target **306** along a boresight direction of the radar sensor **302** can be determined, as known in the art. This can be performed by processing circuitry, such as the processing circuitry **304,** communicatively coupled to the radar sensor **302.** As discussed above, the radar sensor **302** may be communicatively coupled to the processing circuitry in any suitable way, for example via a circuit or any other wired, wireless, or network connection known in the art, implemented as a direct connection or via one or more intermediate entities.

At **406,** the absolute slip velocity $\Delta v$ between the wheel **110** and the ground surface **180** is determined by the processing circuitry based on the determined Doppler velocity. This can be achieved in a number of ways dependent on how the Doppler velocity was acquired and the availability of other motion parameters of the wheel **110,** as will be discussed below. In some examples, the absolute slip velocity $\Delta v$ is determined by determining an otherwise unknown motion parameter based on the determined Doppler velocity, for example a value for the wheel hub longitudinal velocity $v_x$.

At **408,** the determined absolute slip velocity $\Delta v$ can be used to determine a longitudinal wheel slip $s_x$ on the wheel **110** by solving equation (2), noting that the numerator of equation (2) is the absolute slip velocity $\Delta v$ of the wheel **110** according to equation (2). The maximum value of the belt speed $\omega * r$ and the wheel hub longitudinal velocity $v_x$ may be used as the denominator of equation (2) to avoid division by zero, resulting in either the theoretical longitudinal wheel slip or the practical longitudinal wheel slip.

At **410,** the determined absolute slip velocity $\Delta v$ and/or the determined longitudinal wheel slip $s_x$ may be transmitted to a controller of the vehicle **110.** For example, if the processing circuitry **304** of the system **300** determines the absolute slip velocity $\Delta v$ and/or the longitudinal wheel slip $s_x$, it may transmit the value(s) to the controller **140** and/or the computer system **160.** The controller may then perform various vehicle control functions, such as vehicle motion management, based on accurate and reliable estimation of absolute slip velocity $\Delta v$ and/or longitudinal wheel slip $s_x$. Control inputs can therefore be determined in an accurate and reliable manner for the vehicle **100.** These control inputs may be, for example torque, force, or slip requests intended to control tyre forces and achieve various objectives relating to, for example, tyre wear, energy efficiency, traction, stability, and comfort.

In a first example of the determination of absolute slip velocity $\Delta v$ at **406,** the absolute slip velocity $\Delta v$ can be determined directly from a tangential Doppler velocity measurement made parallel to the ground surface **180.** In particular, in the case that the tangential Doppler velocity is measured parallel to the ground surface **180** (for example when the radar sensor **302** is at or close to the contact patch between the wheel **110** and the ground surface **180),** the rotation angle $\theta$ is 90°. This is illustrated in **FIG. 3B.** In this case, the rate of change $\dot{R}_2$ of the distance $R_2$ between the radar sensor **302** and the target **306** may be considered negligible, and equation (16) can be resolved as follows:

$$v_{doppler,tangential} = -r_b * \omega + v_x \qquad (17)$$

This means that the tangential Doppler velocity $v_{doppler,tangential}$ is equal to the negative of the absolute slip velocity $\Delta v$ of the wheel **110** as defined in equation (1). In this approach, no actual values for the wheel hub longitudinal velocity $v_x$, rotation angle $\theta$ of the wheel **110,** or belt speed $\omega * r$ of the wheel **110** are required, as the absolute slip velocity $\Delta v$ is given directly by the tangential Doppler velocity $v_{doppler,tangential}$. Whilst a wheel angle sensor **308** may be used to measure the rotation angle $\theta$ of the wheel **110** in order to determine when the measurement is parallel to the ground surface **180,** this could be determined by other means, such as using a vibration sensor in the wheel **110** to analyse rotational motion of the wheel relative to the ground surface **180,** or by observing a trend shift as the radar sensor rotates past the 90 degree point (as it first rotates towards the ground and then away from the ground).

In a second example of the determination of absolute slip velocity $\Delta v$ at **406,** the absolute slip velocity $\Delta v$ can be determined from a tangential Doppler velocity measurement that is non-parallel to the ground surface **180.** As explained in relation to equation (1), the absolute slip velocity $\Delta v$ of the wheel **110** is related to the tyre (or belt) radius $r_b$, the rotational speed $\omega$ of the wheel **110,** and the longitudinal velocity $v_x$ (of the hub **112**) of the wheel **110.** Based on equation (16), the tangential Doppler velocity $v_{doppler,tangential}$ is related to five variables: the tyre (or belt) radius $r_b$, the rotation angle $\theta$ of the wheel **110,** the hub radius $r_h$ (or radial position of the radar sensor **302**), the rotational speed $\omega$ of the wheel **110,** and the longitudinal velocity $v_x$ (of the hub **112**) of the wheel **110.** Depending on the number of these variables that are known or can be measured, one or more measurements of the tangential Doppler velocity $v_{doppler,tangential}$ can be used to resolve equation (16) and determine any unknowns required to determine the absolute slip velocity $\Delta v$.

For example, assuming the tyre (or belt) radius $r_b$ and the hub radius $r_h$ (or radial position of the radar sensor **302**) are known and the rotation angle $\theta$ of the wheel **110** and the rotational speed $\omega$ of the wheel **110** are measured by respective sensors **308, 310.** A single measurement of the tangential Doppler velocity $v_{doppler,tangential}$ can then be used to resolve equation (16) and determine the longitudinal velocity $v_x$ (of the hub **112**) of the wheel **110.** All values required to determine the absolute slip velocity $\Delta v$ are then obtained. If one of the other variables is unknown then two measurements of the tangential Doppler velocity $v_{doppler,tangential}$ can be used to resolve equation (16) and determine the required unknowns. The two measurements can be made by two separate radar sensors **302** having respective angular (and possible radial) positions, by a single radar sensor **302** at two points in time having respective rotation angles $\theta$ of the wheel **110** (i.e. the wheel **110** has rotated between the two measurements), or a combination of the two. If there are more than two unknowns, then an appropriate number of measurements can be taken using an appropriate number of radar sensors **302.**

In a third example of the determination of absolute slip velocity $\Delta v$ at **406,** the absolute slip velocity $\Delta v$ can be determined from a radial Doppler velocity measurement. As explained in relation to equation (1), the absolute slip velocity $\Delta v$ of the wheel **110** is related to the tyre (or belt) radius $r_b$, the rotational speed $\omega$ of the wheel **110,** and the longitudinal velocity $v_x$ (of the hub **112**) of the wheel **110.** Based on equation (10), the radial Doppler velocity $v_{doppler,radial}$ is related to four variables: the tyre (or belt) radius $r_b$, the rotation angle $\theta$ of the wheel **110,** the rotational speed $\omega$ of the wheel **110,** and the longitudinal velocity $v_x$ (of the hub **112**) of the wheel **110.** Depending on the number of these variables that are known or can be measured, one or more measurements of the radial Doppler velocity $v_{doppler,radial}$ can be used to resolve equation (10) and determine any unknowns required to determine the absolute slip velocity $\Delta v$.

For example, assuming the tyre (or belt) radius $r_b$ is known and the rotation angle $\theta$ of the wheel **110** and the rotational speed $\omega$ of the wheel **110** are measured by respective sensors **308, 310.** A single measurement of the radial Doppler velocity $v_{doppler,radial}$ can then be used to resolve equation (10) and determine the longitudinal velocity $v_x$ (of the hub **112**) of the wheel **110.** All values required to determine the absolute slip velocity $\Delta v$ are then obtained. If one of the other variables is unknown then two measurements of the radial Doppler velocity $v_{doppier,radial}$ can be used to resolve equation (10) and determine the required unknowns. The two measurements can be made by two separate radar sensors **302** having respective angular (and possible radial) positions, by a single radar sensor **302** at two points in time having respective rotation angles $\theta$ of the wheel **110** (i.e. the wheel **110** has rotated between the two measurements), or a combination of the two. If there are more than two unknowns, then an appropriate number of measurements can be taken using an appropriate number of radar sensors **302.**

It will be appreciated that the second and third examples of the determination of absolute slip velocity $\Delta v$ at **406** could be combined. That is to say, a combination of radial and tangential Doppler velocity measurements could be used to determine any unknowns required to determine the absolute slip velocity $\Delta v$.

In a fourth example of the determination of absolute slip velocity $\Delta v$ at **406,** the absolute slip velocity $\Delta v$ can be determined from radial and tangential Doppler velocity measurements using a state space model. A state-space model may be defined with a state vector $x$ and a measurement vector $y$ as follows:

$$x = \begin{bmatrix} v_x \\ \omega * r_b \end{bmatrix} \quad\quad (18)$$

$$y = \begin{bmatrix} v_{doppler,radial} \\ v_{doppler,tangential} \end{bmatrix} \quad\quad (19)$$

As the belt speed $\omega * r$ is selected as one of the states, it will automatically include any effect of a change of the tyre radius. A process model can then be defined as follows:

$$x_{k+1} = I_{2x2}\, x_k + e_k^x, e_k^x \sim N(0,\ Q) \qquad\qquad (20)$$

where $I_{2\times2}$ is an identity matrix, $e$ is noise added to model uncertainty in prediction and measurements, $N$ is a normal distribution, and $Q$ is process covariance. A measurement model can then be defined as follows:

$$y_k = \begin{bmatrix} -\cos(\theta) & \dfrac{\cos(\theta)}{\sin(\theta)^2} \\[2ex] -\sin(\theta) & \dfrac{r_b * \sin(\theta) - r_h}{r_b * \cos^2\theta} + \dfrac{r_h}{r_b} \end{bmatrix} x_k + e_k^y, e_k^y \sim N(0,\ R) \qquad (21)$$

where R is an assumed covariance matrix of the noise $e_k^y$ . This notation means that the noise $e_k^y$ has a normal or Gaussian distribution with zero means and covariance *R*, although it will be appreciated that other noise assumptions may be used.

In this approach, two Doppler velocity measurements and a rotational angle $\theta$ measurement are acquired. In one example, a first Doppler velocity $v_{doppler,radial}$ is measured in a radial dimension of the wheel **110** and a second Doppler velocity $v_{doppler,tangential}$ is measured in a tangential dimension of the wheel **110**. As discussed above, a first radar sensor **302** may acquire the first Doppler velocity $v_{doppler,radial}$ and a second radar sensor **302** may acquire the second Doppler velocity, while in some examples a single radar sensor **302** (for example a radar sensor **302** comprising an antenna array) may acquire both Doppler velocities. Any suitable Doppler velocity measurements may be used, including a measurement in a transverse direction.

The state-space model can be solved to provide a value for the wheel longitudinal velocity $v_x$, as known in the art. For example, the inverse of equation (21) can be determined to provide the state vector *x,* which includes the wheel longitudinal velocity $v_x$. Alternatively, a Kalman filter or the like may be used. A wheel angular speed sensor **310** may measure the rotational speed $\omega$ of the wheel **110,** which can be used along with a measurement of the tyre radius *r* to determine a belt speed, $\omega * r$, of the wheel **110**. Equation (1) can then be solved to determine the absolute slip velocity $\Delta v$.

In an advanced version of the fourth example, a state-space model may be defined with a state vector *x* and a measurement vector *y* additionally including the rotation angle $\theta$ and the rotational speed $\omega$ of the wheel **110**. Here it is assumed that a wheel angle sensor **308** and wheel angular speed sensor **310** are available to measure the rotation angle $\theta$ and the rotational speed $\omega$ of the wheel **110** respectively. This more advanced model allows all measurements to be obtained with different frequencies, and may be preferable when the rotation angle $\theta$ is measured with a relatively low update frequency. In this case, the measurement update for rotation angle $\theta$ will be performed only when a new rotation angle $\theta$ measurement is available. Between measurements, a predicted value of the rotation angle $\theta$ may be determined using the process model. Known methods for interpolation and/or extrapolation can be used to update the model with arbitrary update frequency.

Each of the four examples given above result in more accurate and reliable estimation of absolute slip velocity $\Delta v$ and therefore longitudinal wheel slip $s_x$. Current approaches that use estimated vehicle speed and measured wheel rotational speed, in conjunction with a constant or estimated wheel/tyre radius, to continuously compute longitudinal slip per tyre suffer from the numerical sensitivity of the entities used in the slip calculation (they are highly dependent on an accurate value of wheel radius). Approaches that involve measuring wheel torque, estimating a vertical tyre force, and computing longitudinal wheel slip based on known inverse tyre characteristics are susceptible to uncertainties in the tyre model, such as variations in tyre characteristics due to factors like friction, temperature, tyre pressure, road type, tyre wear, aging, etc. Some approaches rely on using an inertial measurement unit (IMU), comprising accelerometers and/or gyroscopes, that generates a signature that can be used to estimate longitudinal wheel slip when the sensor enters a flat part of the tyre in contact with the ground. A first variation of this approach uses machine learning models that suffer from a lack of generality across conditions beyond their training data. A second variation of this approach uses tyre-physical model-based methods, which depend on tyre physics that can vary. These methods are also difficult to formally verify in terms of performance and robustness. The disclosed approaches mitigate these issues and provide improved estimation of absolute slip velocity and therefore longitudinal wheel slip.

In the case that a single radar sensor **302** is present in the system **300,** the beam will not reach the ground surface **180** continuously. As discussed above, multiple wheel-mounted radar sensors **302** may be present in the system **300.** By having a plurality of radar sensors **302,** e.g. four radar sensors **302** mounted with radial symmetry around the wheel **110,** it may be ensured that at least one tangential and radial beam will reach the ground surface **180**.

Similar concepts may be applied in lateral directions. For example, a radar sensor 302 may be configured to direct a beam in a transverse direction, which can be used to determine lateral motion of the wheel **110**. An absolute lateral slip velocity and lateral slip can then be determined accordingly.

In some examples, the wheel-mounted radar sensor **302** may be arranged to determine a Doppler range measurement of the target, as known in the art. A Doppler range measurement can be used in a number of different ways. For example, if the ground surface **180** is uneven, this will be indicated by disturbances in the measured Doppler range. As such, the Doppler range data can be used to verify that the disturbances are due to unevenness in the ground surface **180** and not due to other effects.

In some examples, radar signal reflections from the interior of the tyre can be identified based on detection distance. For example, backscatter received from the tyre **114** itself will have a distance indicative of, for example, the tyre radius. An abrupt change in this detection distance may be indicative of when the tyre belt hits the contact patch.

In some examples, the wheel **110** may also have an IMU. A radar sensor **302** rotating towards or away from the ground surface **180** will see a change in measurements over time. The rotation of the gravitational acceleration measured by the IMU will be a function of the rotation of the wheel **110** with no influence from the ground surface **180.** The rate of change of the radar Doppler measurements can be compared to the rate of change of the IMU acceleration vector to provide a quantity that correlates with longitudinal wheel slip. For example, if the longitudinal wheel slip is high, then the rate of change of the Doppler measurements should differ more from the IMU rotation signal, and vice versa.

FIG. 5 is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A system (300) for determining an absolute slip velocity, $\Delta v$, between a wheel (110) of a vehicle (100) and a ground surface (180) supporting the wheel (100), the system (300) comprising: one or more wheel-mounted radar sensors (302) configured to receive radio waves reflected from the ground surface (180); and processing circuitry (150, 170, 304, 502) configured to: determine a Doppler velocity corresponding to the ground surface (180) based on properties of the received radio waves; and determine the absolute slip velocity, $\Delta v$, between the wheel (110) and the ground surface (180) based on the determined Doppler velocity.

Example 2: The system (300) of example 1, wherein the Doppler velocity is measured in a tangential dimension of the wheel (100).

Example 3: The system (300) of example 2, wherein the tangential Doppler velocity $v_{doppler,tangential}$, corresponds to the ground surface (180) and is measured parallel to the ground surface (180).

Example 4: The system (300) of example 2, wherein the processing circuitry (150, 170, 304, 502) is further configured to: acquire one or more wheel parameters, wherein the wheel parameters include a rotation angle, $\theta$, of the wheel (110), a rotational speed $\omega$ of the wheel (110), a tyre radius $r_b$ of the wheel (110), a radial position of the one or more radar sensors (302), and a longitudinal velocity, $v_x$, of the hub (112) of the wheel (110) relative to the ground surface (180); acquire one or more tangential Doppler velocity measurements $v_{doppler,tangential}$, wherein the number of tangential Doppler velocity measurements $v_{doppler,tangential}$ corresponds to the number of unknown wheel parameters; determine one or more unknown wheel parameters based on the acquired wheel parameters and tangential Doppler velocity measurements, $v_{doppler,tangential}$; and determine the absolute slip velocity, $\Delta v$, based on the acquired and determined wheel parameters.

Example 5: The system (300) of example 1, wherein the Doppler velocity is measured in a radial dimension of the wheel (110), and the processing circuitry (150, 170, 304, 502) is further configured to: acquire one or more wheel parameters, wherein the wheel parameters include a rotation angle, $\theta$, of the wheel (110), a rotational speed $\omega$ of the wheel (110), a tyre radius $r_b$ of the wheel (110), and a longitudinal velocity, $v_x$, of the hub (112) of the wheel (110) relative to the ground surface (180); acquire one or more radial Doppler velocity measurements $v_{doppler,radial}$, wherein the number of radial Doppler velocity measurements $v_{doppler,radial}$ corresponds to the number of unknown wheel parameters; determine one or more unknown wheel parameters based on the acquired wheel parameters and radial Doppler velocity measurements, $v_{doppler,radial}$; and determine the absolute slip velocity, $\Delta v$, based on the acquired and determined wheel parameters.

Example 6: The system (300) of any preceding example, wherein the Doppler velocity comprises a first Doppler velocity and a second Doppler velocity, and the processing circuitry (150, 170, 304, 502) is configured to: acquire a rotation angle, $\theta$, of the wheel (110); determine a longitudinal velocity, $v_x$, of the hub (112) of the wheel (110) relative to the ground surface (180) using a state-space model based on the acquired first Doppler velocity, second Doppler velocity, and rotation angle, $\theta$; acquire a belt speed, $\omega * r$, of the wheel (110); and determine the absolute slip velocity, $\Delta v$, by subtracting the longitudinal velocity, $v_x$, from the belt speed, $\omega * r$.

Example 7: The system (300) of example 6, wherein the processing circuitry (150, 170, 304, 502) is configured to determine a belt speed, $\omega * r$, of the wheel (110) using the state-space model.

Example 8: The system (300) of any of examples 4 to 7, wherein the processing circuitry (150, 170, 304, 502) is further configured to: determine a longitudinal slip, $s_x$, acting on the wheel (110) based on the determined absolute slip velocity, $\Delta v$, and the longitudinal velocity, $v_x$; and/or determine a longitudinal slip, $s_x$, acting on the wheel (110) based on the determined absolute slip velocity, $\Delta v$, and the belt speed, $\omega * r$.

Example 9: The system (300) of example 8, wherein the processing circuitry is configured to determine the longitudinal slip, $s_x$, based on the largest of the longitudinal velocity, $v_x$, and the belt speed, $\omega * r$.

Example 10: A vehicle (100) comprising the system (300) of any preceding example.

Example 11: The vehicle (100) of example 10, wherein the system (300) is mounted in one or more of a tyre (114) or wheel hub (112) of the vehicle (100).

Example 12: The vehicle (100) of example 10 or 11, wherein the system (300) is configured to transmit one or more of a determined slip velocity and a longitudinal slip to a controller (140, 160) of the vehicle (100).

Example 13: A method (400) for determining an absolute slip velocity, $\Delta v$, between a wheel (110) of a vehicle (100) and a ground surface (180) supporting the wheel (110), the method (400) comprising: receiving (402), by one or more wheel-mounted radar sensors (302), radio waves reflected from the ground surface (180); determining (404), by processing circuitry (150, 170, 304, 502) of a computer system, a Doppler velocity corresponding to the ground surface (180) based on properties of the received radio waves; and determining (406), by the processing circuitry (150, 170, 304, 502), the absolute slip velocity, $\Delta v$, between the wheel (110) and the ground surface (180) based on the determined Doppler velocity.

Example 14: The method (400) of example 13, wherein the Doppler velocity is measured in a tangential dimension of the wheel (100).

Example 15: The method (400) of example 14, wherein the tangential Doppler velocity $v_{doppler,tangential}$, corresponds to the ground surface (180) and is measured parallel to the ground surface (180).

Example 16: The method (400) of example 14, wherein further comprising: acquiring, by the processing circuitry (150, 170, 304, 502), one or more wheel parameters, wherein the wheel parameters include a rotation angle, $\theta$, of the wheel (110), a rotational speed $\omega$ of the wheel (110), a tyre radius $r_b$ of the wheel (110), a radial position of the one or more radar sensors (302), and a longitudinal velocity, $v_x$, of the hub (112) of the wheel (110) relative to the ground surface (180); acquiring, by the processing circuitry (150, 170, 304, 502), one or more tangential Doppler velocity measurements $v_{doppler,tangential}$, wherein the number of tangential Doppler velocity measurements $v_{doppler,tangential}$ corresponds to the number of unknown wheel parameters; determining, by the processing circuitry (150, 170, 304, 502), one or more unknown wheel parameters based on the acquired wheel parameters and tangential Doppler velocity measurements, $v_{doppler,tangential}$; and determining, by the processing circuitry (150, 170, 304, 502), the absolute slip velocity, $\Delta v$, based on the acquired and determined wheel parameters.

Example 17: The method (400) of example 13, wherein the Doppler velocity is measured in a radial dimension of the wheel (110), and the method (400) further comprises: acquiring, by the processing circuitry (150, 170, 304, 502), one or more wheel parameters, wherein the wheel parameters include a rotation angle, $\theta$, of the wheel (110), a rotational speed $\omega$ of the wheel (110), a tyre radius $r_b$ of the wheel (110), and a longitudinal velocity, $v_x$, of the hub (112) of the wheel (110) relative to the ground surface (180); acquiring, by the processing circuitry (150, 170, 304, 502), one or more radial Doppler velocity measurements $v_{doppler,radial}$, wherein the number of radial Doppler velocity measurements $v_{doppler,radial}$ corresponds to the number of unknown wheel parameters; determining, by the processing circuitry (150, 170, 304, 502), one or more unknown wheel parameters based on the acquired wheel parameters and radial Doppler velocity measurements, $v_{doppler,radial}$; and determining, by the processing circuitry (150, 170, 304, 502), the absolute slip velocity, $\Delta v$, based on the acquired and determined wheel parameters.

Example 18: The method (400) of any of examples 13 to 17, wherein the Doppler velocity comprises a first Doppler velocity and a second Doppler velocity, and the method (400) further comprises: acquiring a rotation angle, $\theta$, of the wheel (110); determining a longitudinal velocity, $v_x$, of the hub (112) of the wheel (110) relative to the ground surface (180) using a state-space model based on the acquired first Doppler velocity, second Doppler velocity, and rotation angle, $\theta$; acquiring, by the processing circuitry (150, 170, 304, 502), a belt speed, $\omega * r$, of the wheel (110); and determining, by the processing circuitry (150, 170, 304, 502), the absolute slip velocity, $\Delta v$, by subtracting the

longitudinal velocity, $v_x$, from the belt speed, $\omega * r$.

Example 19: The method (400) of example 18, wherein the method (400) further comprises determining, by the processing circuitry (150, 170, 304, 502), a belt speed, $\omega * r$, of the wheel (110), using the state-space model.

Example 20: The method (400) of any of examples 16 to 19, wherein the method (400) further comprises: determining (408), by the processing circuitry (150, 170, 304, 502), a longitudinal slip, $s_x$, acting on the wheel (110) based on the determined absolute slip velocity, $\Delta v$, and the longitudinal velocity, $v_x$; and/or determining (408), by the processing circuitry (150, 170, 304, 502), a longitudinal slip, $s_x$, acting on the wheel (110) based on the determined absolute slip velocity, $\Delta v$, and the belt speed, $\omega * r$.

Example 21: The method (400) of example 20, wherein the method (400) further comprises determining (408), by the processing circuitry (150, 170, 304, 502), the longitudinal slip, $s_x$, based on the largest of the longitudinal velocity, $v_x$, and the belt speed, $\omega * r$.

Example 22: A computer program product comprising program code for performing, when executed by processing circuitry (150, 170, 304, 502), the computer-implemented method (400) of any of examples 13 to 21.

Example 23: A non-transitory computer-readable storage medium comprising instructions, which when executed by processing circuitry (150, 170, 304, 502), cause the processing circuitry to perform the computer-implemented method (400) of any of examples 13 to 21.

Example 24: A system (300) for determining an absolute slip velocity, $\Delta v$, between a wheel (110) of a vehicle (100) and a ground surface (180) supporting the wheel (110), the system (300) comprising: one or more wheel-mounted radar sensors (302) configured to acquire a Doppler velocity corresponding to the ground surface (180); and processing circuitry (150, 170, 304, 502) configured to: receive the acquired Doppler velocity from the one or more wheel-mounted radar sensors (302); and determine the absolute slip velocity, $\Delta v$, between the wheel (110) and the ground surface (180) based on the acquired Doppler velocity.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (300) for determining an absolute slip velocity, $\Delta v$, between a wheel (110) of a vehicle (100) and a ground surface (180) supporting the wheel (100), the system (300) comprising:

one or more wheel-mounted radar sensors (302) configured to receive radio waves reflected from the ground surface (180); and
processing circuitry (150, 170, 304, 502) configured to:

determine a Doppler velocity corresponding to the ground surface (180) based on properties of the received radio waves; and
determine the absolute slip velocity, $\Delta v$, between the wheel (110) and the ground surface (180) based on the determined Doppler velocity.

2. The system (300) of claim 1, wherein the Doppler velocity is measured in a tangential dimension of the wheel (100).

3. The system (300) of claim 2, wherein the tangential Doppler velocity $v_{doppler,tangential}$, corresponds to the ground surface (180) and is measured parallel to the ground surface (180).

4. The system (300) of claim 2, wherein the processing circuitry (150, 170, 304, 502) is further configured to:

acquire one or more wheel parameters, wherein the wheel parameters include a rotation angle, $\theta$, of the wheel (110), a rotational speed $\omega$ of the wheel (110), a tyre radius $r_b$ of the wheel (110), a radial position of the one or more radar sensors (302), and a longitudinal velocity, $v_x$, of the hub (112) of the wheel (110) relative to the ground surface (180);
acquire one or more tangential Doppler velocity measurements $v_{doppler,tangential}$, wherein the number of tangential Doppler velocity measurements $v_{doppler,tangential}$ corresponds to the number of unknown wheel parameters;
determine one or more unknown wheel parameters based on the acquired wheel parameters and tangential Doppler velocity measurements, $v_{doppler,tangential}$; and
determine the absolute slip velocity, $\Delta v$, based on the acquired and determined wheel parameters.

5. The system (300) of claim 1, wherein the Doppler velocity is measured in a radial dimension of the wheel (110), and the processing circuitry (150, 170, 304, 502) is further configured to:

acquire one or more wheel parameters, wherein the wheel parameters include a rotation angle, $\theta$, of the wheel (110), a rotational speed $\omega$ of the wheel (110), a tyre radius $r_b$ of the wheel (110), and a longitudinal velocity, $v_x$, of the hub (112) of the wheel (110) relative to the ground surface (180);
acquire one or more radial Doppler velocity measurements $v_{doppler,radial}$, wherein the number of radial Doppler velocity measurements $v_{doppler,radial}$ corresponds to the number of unknown wheel parameters;
determine one or more unknown wheel parameters based on the acquired wheel parameters and radial Doppler velocity measurements, $v_{doppler,radial}$; and
determine the absolute slip velocity, $\Delta v$, based on the acquired and determined wheel parameters.

6. The system (300) of any preceding claim, wherein the Doppler velocity comprises a first Doppler velocity and a second Doppler velocity, and the processing circuitry (150, 170, 304, 502) is configured to:

acquire a rotation angle, $\theta$, of the wheel (110);
determine a longitudinal velocity, $v_x$, of the hub (112) of the wheel (110) relative to the ground surface (180) using a state-space model based on the acquired first Doppler velocity, second Doppler velocity, and rotation angle, $\theta$;
acquire a belt speed, $\omega * r$, of the wheel (110); and
determine the absolute slip velocity, $\Delta v$, by subtracting the longitudinal velocity, $v_x$, from the belt speed, $\omega * r$.

7. The system (300) of claim 6, wherein the processing circuitry (150, 170, 304, 502) is configured to determine a belt speed, $\omega * r$, of the wheel (110) using the state-space model.

8. The system (300) of any of claims 4 to 7, wherein the processing circuitry (150, 170, 304, 502) is further configured to:

determine a longitudinal slip, $s_x$, acting on the wheel (110) based on the determined absolute slip velocity, $\Delta v$, and the longitudinal velocity, $v_x$; and/or
determine a longitudinal slip, $s_x$, acting on the wheel (110) based on the determined absolute slip velocity, $\Delta v$, and the belt speed, $\omega * r$.

9. The system (300) of claim 8, wherein the processing circuitry (150, 170, 304, 502) is configured to determine the

longitudinal slip, $s_x$, based on the largest of the longitudinal velocity, $v_x$, and the belt speed, $\omega * r$.

10. A vehicle (100) comprising the system (300) of any preceding claim.

11. The vehicle (100) of claim 10, wherein the system (300) is mounted in one or more of a tyre (114) or wheel hub (112) of the vehicle (100).

12. The vehicle (100) of claim 10 or 11, wherein the system (300) is configured to transmit one or more of a determined slip velocity and a longitudinal slip to a controller (140, 160) of the vehicle (100).

13. A method (400) for determining an absolute slip velocity, $\Delta v$, between a wheel (110) of a vehicle (100) and a ground surface (180) supporting the wheel (110), the method (400) comprising:

receiving (402), by one or more wheel-mounted radar sensors (302), radio waves reflected from the ground surface (180);
determining (404), by processing circuitry (150, 170, 304, 502) of a computer system, a Doppler velocity corresponding to the ground surface (180) based on properties of the received radio waves; and
determining (406), by the processing circuitry (150, 170, 304, 502), the absolute slip velocity, $\Delta v$, between the wheel (110) and the ground surface (180) based on the determined Doppler velocity.

14. A computer program product comprising program code for performing, when executed by processing circuitry (150, 170, 304, 502), the computer-implemented method (400) of claim 13.

15. A non-transitory computer-readable storage medium comprising instructions, which when executed by processing circuitry (150, 170, 304, 502), cause the processing circuitry to perform the computer-implemented method (400) of claim 13.

**FIG. 1**

**FIG. 2A**          **FIG. 2B**          **FIG. 2C**

**FIG. 3A**

**FIG. 3B**

**FIG. 3C**

400

Receiving, by one or more wheel-mounted radar sensors, radio waves reflected from a ground surface supporting the wheel — 402

Determining, by processing circuitry, a Doppler velocity corresponding to the ground surface based on properties of the received radio waves — 404

Determining, by the processing circuitry, the absolute slip velocity between the wheel and the ground surface based on the determined Doppler velocity — 406

Determining, by the processing circuitry, a longitudinal wheel sleep on the wheel based on the absolute slip velocity — 408

Transmitting, by the processing circuitry, the absolute slip velocity and/or longitudinal wheel sleep to a controller of the vehicle — 410

**FIG. 4**

500
504
508
512
510
516  518
502
506
514
520
522  524  526

**FIG. 5**

Europäisches
Patentamt

European
Patent Office

Office européen
des brevets

# EUROPEAN SEARCH REPORT

**Application Number**

EP 24 21 1501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 212 464 B1 (SKOTNIKOV ANDREY [US]) 3 April 2001 (2001-04-03) * abstract; figures 1, 3, 4 * * column 3, line 36 - column 4, line 43 * ----- | 1-15 | INV. G01S13/60 B60C23/00 B60T8/00 |
| A | US 2024/359706 A1 (TAGESSON KRISTOFFER [SE] ET AL) 31 October 2024 (2024-10-31) * abstract; figures 1-3 * * paragraphs [0067] - [0074], [0086] - [0088] * ----- | 1-15 | |
| A | US 2022/161801 A1 (ARIKERE ADITHYA [SE] ET AL) 26 May 2022 (2022-05-26) * abstract; figures 1-3 * * paragraphs [0041] - [0043], [0096] - [0098] * ----- | 1-15 | |

**TECHNICAL FIELDS SEARCHED (IPC)**

B60C
B60T
G01S

The present search report has been drawn up for all claims

| Place of search | Date of completion of the search | Examiner |
|---|---|---|
| Munich | 11 April 2025 | Cordeiro, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

# EP 4 741 876 A1

## ANNEX TO THE EUROPEAN SEARCH REPORT
## ON EUROPEAN PATENT APPLICATION NO.

EP 24 21 1501

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2025

| Patent document cited in search report | | Publication date | Patent family member(s) | | Publication date |
|---|---|---|---|---|---|
| US 6212464 | B1 | 03-04-2001 | NONE | | |
| US 2024359706 | A1 | 31-10-2024 | CN | 117836193 A | 05-04-2024 |
| | | | EP | 4396063 A1 | 10-07-2024 |
| | | | JP | 2024531489 A | 29-08-2024 |
| | | | KR | 20240054985 A | 26-04-2024 |
| | | | US | 2024359706 A1 | 31-10-2024 |
| | | | WO | 2023030615 A1 | 09-03-2023 |
| US 2022161801 | A1 | 26-05-2022 | CN | 114604247 A | 10-06-2022 |
| | | | EP | 4005883 A1 | 01-06-2022 |
| | | | JP | 2022083985 A | 06-06-2022 |
| | | | KR | 20220072759 A | 02-06-2022 |
| | | | US | 2022161801 A1 | 26-05-2022 |

EPO FORM P0459

For more details about this annex : see Official Journal of the European Patent Office, No. 12/82